# EUROPEAN PATENT APPLICATION

(11) **EP 0 830 885 A1**
(43) Date of publication of application: **25.03.1998**
(21) Application number: 97303029.9
(22) Date of filing: 02.05.1997
(51) Int. Cl.: B01D 35/30, B01D 27/08

(54) **Filer assembly**

(30) Priority: 21.09.1996 GB 9620002
(71) Applicant: LUCAS INDUSTRIES public limited company, Solihull, B90 4LA (GB)
(72) Inventor: Bradford, Peter Francis, Sheerness, Kent ME12 3HX (GB); Greenfield, David Frederick, Gillingham, Kent ME7 3RB (GB)
(74) Representative: Bailey, Richard Alan

(57) **Abstract**

A filter assembly comprises a filter head (10) and a filter cartridge (12) securable to the filter head (10). The filter head (10) includes a plurality of outwardly extending ramped projections (22) constituting a first component of a bayonet-type coupling, the ramped projections (22) being cooperable with similar projections (24a) of the cartridge (12) to secure the cartridge (12) to the filter head (10).

## Description

This invention relates to a filter assembly suitable for use in the removal of contaminants from a flow of diesel fuel. Conventional filter assemblies comprise a filter head including inlet and outlet ports for connection to appropriate parts of a fuel supply system, and a filter cartridge mounted upon the filter head so that fuel passing between the inlet and outlet ports flows through the filter cartridge.

A number of techniques are known for mounting the filter cartridge upon the filter head. For example, it is known to clamp the filter cartridge between the filter head and a bowl located beneath the cartridge using a bolt extending through an axially extending passage provided in the filter cartridge. In another arrangement, the cartridge is clamped to the filter head by means of a separate clamping ring, the engagement between the clamping ring and the filter head taking the form of, for example, a bayonet-type coupling.

It is an object of the invention to provide a filter assembly in which mounting and removal of the filter cartridge does not require the use of tools, and in which the number of separate parts is reduced.

According to the present invention there is provided a filter assembly comprising a filter head and a filter cartridge, wherein the filter head includes a first component of a bayonet-type coupling, a second component of the bayonet-type coupling being an integral part of the filter cartridge.

The invention further relates to a filter head and to a filter cartridge suitable for use in such a filter assembly.

It will be appreciated that the use of a bayonet-type coupling enables the filter cartridge to be secured to or removed from the filter head without requiring the use of tools. Further, as the second component of the coupling is integrally formed with the filter cartridge, fewer parts are used than in the conventional arrangements, thus the risk of loss of one or more parts is reduced.

The invention will further be described, by way of example, with reference to the accompanying drawings, in which:-
Figure 1 is a side view of a filter assembly in accordance with an embodiment of the invention;
Figure 2 is a perspective view of part of the filter head shown in Figure 1;

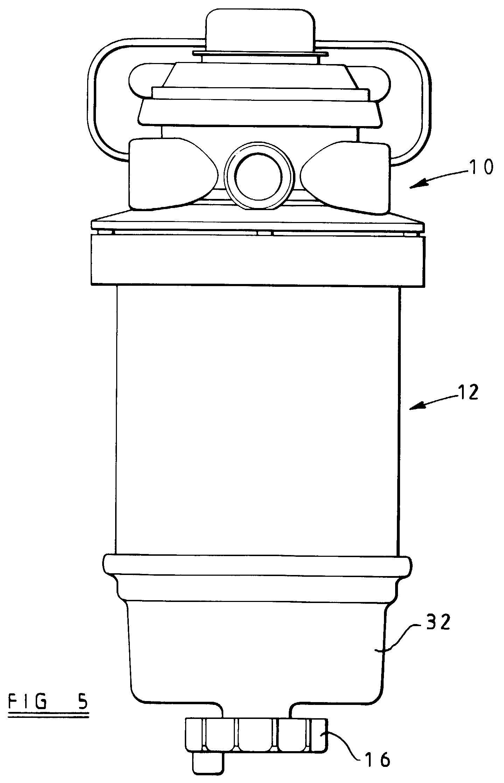

Figure 3 is a side view of part of the filter head shown in Figure 2;
Figures 4a and 4b are diagrammatic views illustrating the components of the bayonet coupling;
Figure 5 is a view similar to Figure 1 of an alternative embodiment; and
Figure 6 is a cross-sectional view of part of the embodiment of Figure 5.

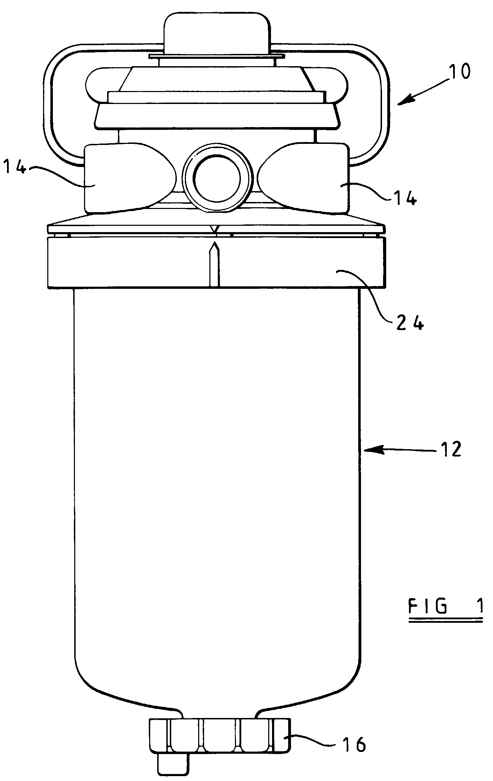

The filter assembly illustrated in Figure 1 comprises a filter head 10 to which a filter cartridge 12 is secured. The filter head 10 includes a plurality of ports 14 for use in connecting the filter head 10 to a suitable source of fuel and to a fuel pump of a fuel supply system for an engine. Suitable passages are provided in the filter head 10 to permit communication between the ports 14 and the filter cartridge 12 such that in order for fuel to flow from an inlet port to an outlet port of the filter head 10, the fuel must flow through the filter cartridge 12.

The filter cartridge 12 illustrated in Figure 1 comprises a housing within which a coiled or pleated filter member is provided, the housing including a perforated upper surface located above the filter member, and a perforated partition located beneath the filter member, an axially extending passage extending between the perforated upper surface and the perforated partition. Beneath the partition, the housing defines a collection bowl in which water tends to collect, in use, due to the density of water being greater than that of diesel fuel. A plug 16 is located at the bottom of the housing, the plug 16 being removable in order to permit drainage of water from the collection bowl.

The filter head 10 is arranged such that one of the ports 14 thereof communicates with the perforated upper surface of the filter cartridge 12 whilst another of the ports 14 communicates with the axially extending passage of the filter cartridge 12. It will be appreciated, therefore, that in order for fuel to flow between the ports, the fuel must flow either downwardly through the coiled filter member, through the perforated partition and then return upwardly through the axially extending passage, or alternatively the fuel may flow downwardly through the axially extending passage, through the collection chamber and return in an upward direction through the coiled filter member.

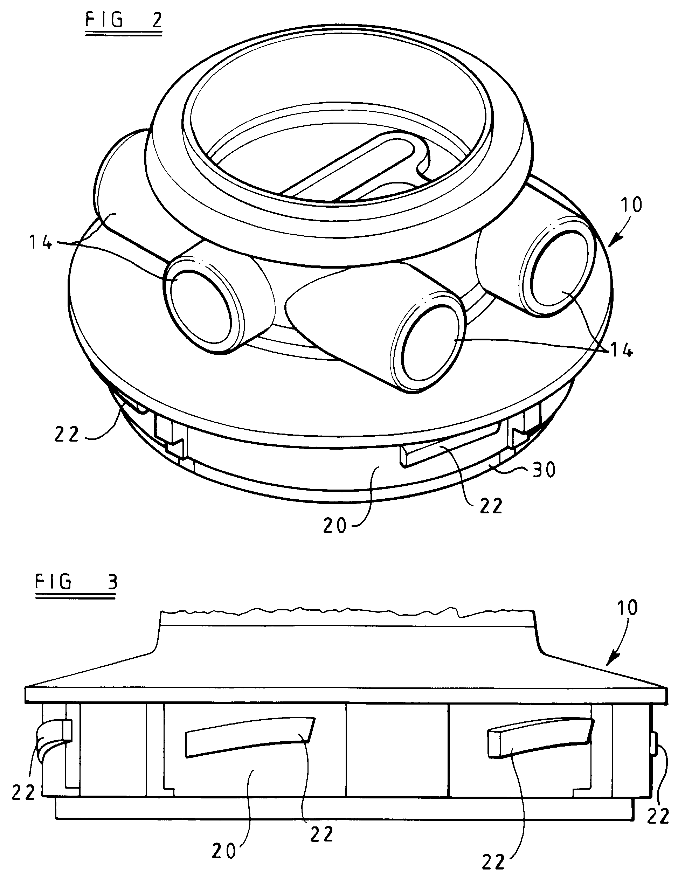

The filter head 10 and cartridge 12 are secured to one another by means of a bayonet-type coupling. As illustrated in Figure 2, the filter head 10 includes a downwardly extending annular wall 20 the outer surface of which is provided with a plurality of spaced radially outwardly extending ramped projections 22 which constitute a first component of the bayonet coupling arrangement. The upper end of the cartridge 12 includes a region 24 of enlarged diameter, the inner surface of which is provided with a similar plurality of projections 24a which extend radially inwardly and are arranged to cooperate with the projections 22 in order to secure the cartridge 12 to the filter head 10.

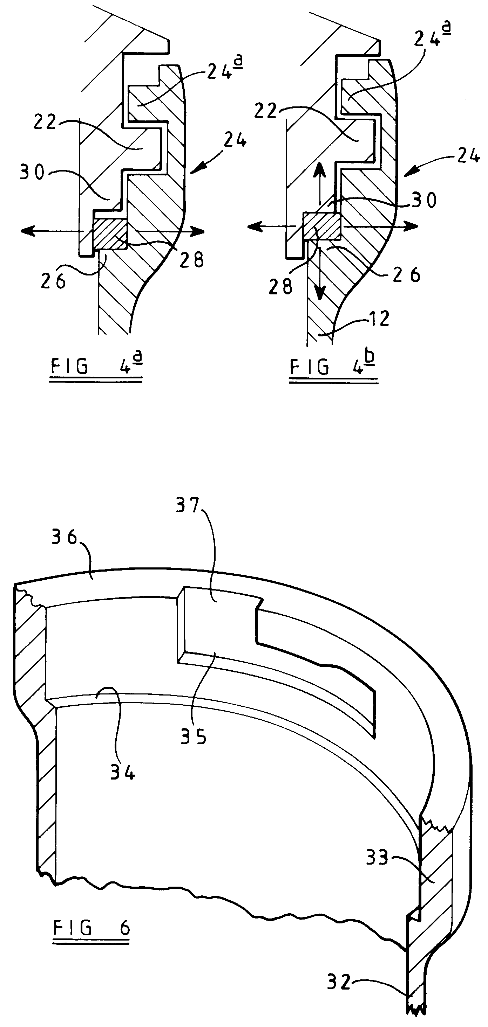

As illustrated in Figures 4a and 4b, the inner surface of the filter cartridge 12 includes a step 26 located below the inwardly extending projections 24a thereof, the step 26 acting as a support for an annular sealing ring 28.

In order to secure the cartridge 12 to the filter head 10, the cartridge 12 is located beneath the filter head 10 with the inwardly extending projections 24a thereof being located between the outwardly extending projections 22 of the filter head. This position is illustrated in Figure 4a. In this position, the annular sealing ring 28 is located within an annular chamber defined between the step 26 of the cartridge 12, and a step 30 provided on the wall 20. From this position, the cartridge 12 is moved with respect to the filter head 10 such that each of the projections 24a rides along a respective one of the outwardly extending ramped projections 22 of the filter head, and it will be appreciated that as the projections 24a ride along the ramped projections 22, the annular sealing ring 28 is compressed between the step 26 and the step 30 to form a fluid tight seal between the filter head 10 and cartridge 12 as shown in Figure 4b, the arrows in Figures 4a and 4b denoting the forces applied to the filter head 10 and cartridge 12 by the sealing ring 28.

It will be appreciated from Figure 4b that when the cartridge 12 is mounted upon the filter head 10, the sealing ring 28 is in sealing engagement with the step 26, a portion of the wall of the filter cartridge 12 adjacent the step 26, the step 30 of the filter head 10 and a portion of the wall 20 adjacent the step 30. The compression of the sealing ring to achieve such contact results in sealing of the filter cartridge 12 to the filter head 10 occurring even when the load applied to the cartridge 12 in order to secure the cartridge 12 to the filter head 10 is relatively low.

If it is required for the filter cartridge 12 to adopt a particular angular position with respect to the filter head 10 when assembled, such an arrangement may be achieved by unevenly spacing the projections 22 and projections 24a such that registration of the projections only occurs in a single angular orientation of the cartridge 12 with respect to the filter head 10.

Removal of the filter cartridge 12 simply requires angular movement of the cartridge 12 with respect to the head 10 in the reverse direction until the projections 22, 24a no longer cooperate with one another. Downward movement of the filter cartridge 12 from this position separates the cartridge 12 from the filter head 10.

Figures 5 and 6 illustrate an alternative arrangement in which the filter cartridge 12 does not include an integral collection bowl, and instead a separate collection bowl 32 is secured to the lower end of the cartridge 12. The coupling between the cartridge and the bowl is of the bayonet type and one example is seen in Figure 6. The bowl is provided with a rim 33 on the internal surface of which is defined an annular ledge 34 spaced from the end surface 36 of the bowl. Formed in the internal surface of the rim are a plurality of angularly spaced recesses 35. The circumferential length of the recesses is just over three times the length of projections not shown, which are formed on the outer surface of the cartridge. These projections have a shape which is substantially the same as the projections 22 formed on the filter head. The recesses 35 at one end open onto the end surface 36 of the bowl to define entrance slots 37 to receive the respective projections as the bowl and cartridge are moved axially relative to each other. Once the projections are located within the recesses respectively the bowl and cartridge are moved angularly relative to each other, the presented surfaces of the projections on the cartridge and the surfaces of the recess cooperating with each other to compress a seal ring interposed between the ledge 34 and a complementary ledge on the cartridge. The cooperating surfaces of the projections and the recesses are shaped so that as the bowl and cartridge reach the limit of their angular movement a slight relaxation of the seal ring takes place. This is achieved by providing a step in the surface formed on the bowl. The provision of the steps acts to minimise the risk of the bowl and cartridge being dislodged in use.

It will be appreciated that the inwardly extending projections of the first embodiment may be of the form illustrated in Figure 6.

As in the first embodiment, the bowl 32 includes at its lower end, an outlet within which a plug is received to permit the removal of water or other relatively dense contaminants from the bowl.

If desired, the bowl 32 may be constructed of a transparent material to permit monitoring of the quantity of contaminants collected therein and thus provide an indication as to when drainage of the contaminants therefrom is required.

In both of the embodiments described hereinbefore, the connection between the filter cartridge 12 and the filter head 10 is by means of a bayonet-type coupling arrangement in which the first components of the coupling arrangement are integral with the filter head 10, the second components of the coupling arrangement being integral parts of the filter cartridge 12. It will be appreciated that the use of a bayonet-type coupling permits the filter cartridge 12 to be secured to or removed from the filter head 10 without the use of tools, and further that other than the sealing ring 28, there are no additional parts thus the risk of loss of one or more parts of the filter assembly during maintenance thereof is reduced. The risk of loss of one or more parts may be further reduced if the sealing ring 28 is captive on the cartridge 12.

In either of the embodiments described hereinbefore, automated water sensor devices may be provided, and automatic drain arrangements may be used. The sealing ring 28 may comprise an O-ring, or alternatively may take the form of a profiled seal ring.

The filter head is not described in detail herein, and it will be appreciated that a variety of filter head designs may be modified in accordance with the invention to provide a bayonet-type coupling between the filter head and filter cartridge, the components of the bayonet-type coupling being integral parts of the filter head and filter cartridge.

## Claims

1. A filter assembly comprising a filter head (10) and a filter cartridge (12), the filter head (10) including a first component of a bayonet-type coupling, and characterized in that a second component of the bayonet-type coupling forms an integral part of the filter cartridge (12).

2. A filter assembly as claimed in Claim 1, wherein the first component comprises a plurality of projections (22) extending outwardly from the filter head (10), the second component comprising a plurality of inwardly extending projections (24a) arranged to cooperate with the outwardly extending projections (22).

3. A filter assembly as claimed in Claim 2, wherein the outwardly extending projections (22) are of ramped form.

4. A filter assembly as claimed in any one of the preceding claims, further comprising a bowl (32) securable to the filter cartridge (12), and a bayonet-type coupling arrangement for securing the bowl (32) to the filter cartridge (12).
